# EUROPEAN PATENT APPLICATION

(11) **EP 4 753 009 A1**
(43) Date of publication of application: **03.06.2026**
(21) Application number: 24845250.0
(22) Date of filing: 17.06.2024
(51) Int. Cl.: H01M 10/0587, H01M 4/38, H01M 10/052, H01M 50/463, H01M 50/489

(54) **LITHIUM SECONDARY BATTERY AND SEPARATOR**

(30) Priority: 27.07.2023 JP 2023122847
(71) Applicant: Panasonic Intellectual Property Management Co., Ltd., Kadoma-shi, Osaka 571-0057 (JP)
(72) Inventor: MIYAMAE Ryohei, Kadoma-shi, Osaka 571-0057 (JP); KONDO Shinichiro, Kadoma-shi, Osaka 571-0057 (JP); KANO Akira, Kadoma-shi, Osaka 571-0057 (JP)
(74) Representative: Novagraaf International SA
(86) International application number: PCT/JP2024/021921
(87) International publication number: WO 2025/022868

(57) **Abstract**

A lithium secondary battery includes an electrode group and a nonaqueous electrolyte. The electrode group includes a positive electrode, a negative electrode, and a separator. The positive electrode and the negative electrode are wound with the separator therebetween. In the negative electrode, lithium metal deposits during charging and the lithium metal dissolves in the nonaqueous electrolyte during discharging. The separator has a first surface facing outward of the electrode group and a second surface facing inward of the electrode group. At least one of the first surface and the second surface has a first region including first protrusions arranged in the first pattern, and a second region including second protrusions arranged in a second pattern that differs from the first pattern. The second region is located on the outer circumferential side of the electrode group relative to the first region.

## Description

### [Cross Reference to Related Application]

The present application is based on and claims priority under 35 U.S.C. §119 to Japanese Patent Application No. 2023-122847, filed on July 27, 2023, of which entire content is incorporated herein by reference into the present application.

### [Technical Field]

The present disclosure relates to a lithium secondary battery and a separator.

### [Background Art]

Lithium-ion batteries are known as high-capacity nonaqueous electrolyte secondary batteries. Lithium secondary batteries (lithium-metal secondary batteries) are promising nonaqueous electrolyte secondary batteries with a high capacity that surpass the lithium ion batteries. In a lithium secondary battery, lithium metal deposits on its negative electrode during charging, and the lithium metal dissolves during discharging to be released into the nonaqueous electrolyte as lithium ions.

For deposition of lithium metal on the negative electrode during charging, the lithium secondary battery is required to have ensured space between the separator and the electrode.

Patent Literature 1 proposes "a lithium secondary battery including a positive electrode, a negative electrode, a separator provided between the positive electrode and the negative electrode, and a nonaqueous electrolyte having lithium ion conductivity, wherein lithium metal deposits on the negative electrode during charging, the lithium metal dissolves from the negative electrode during discharging, a spacer is provided between the separator and at least one of the positive electrode and the negative electrode, a first length of the separator in a first direction D1 is smaller than a second length thereof in a second direction D2 intersecting the first direction, and in a section of the spacer cut along the thickness direction of the separator and the first direction D1, at least one of a spacer-side angle formed between the separator and the spacer and a spacer-side angle formed between the electrode in contact with the spacer and the spacer is larger than 90°.

### [Citation List]

### [Patent Literature]

Patent Literature 1: International Publication No. 2021/192645 pamphlet

### [Summary of Invention]

### [Technical Problem]

When an electrode group is formed by winding a positive electrode and a negative electrode with a separator therebetween, the height of the space for lithium deposition may be insufficient on the inner circumferential side of the electrode group. Such insufficient height of the space may serve as a cause of electrode buckling due to excessive stress on the inner circumferential side.

### [Solution to Problem]

One aspect of the present disclosure relates to a lithium secondary battery including: an electrode group; and a nonaqueous electrolyte, wherein the electrode group includes a positive electrode, a negative electrode, and a separator, the positive electrode and the negative electrode are wound with the separator therebetween, in the negative electrode, lithium metal deposits during charging and the lithium metal dissolves in the nonaqueous electrolyte during discharging, the separator has a first surface facing outward of the electrode group and a second surface facing inward of the electrode group, at least one of the first surface and the second surface has a first region including first protrusions arranged in a first pattern, and a second region including second protrusions arranged in a second pattern that differs from the first pattern, and the second region is located on an outer circumferential side of the electrode group relative to the first region.

Another aspect of the present disclosure relates to a separator wound between a positive electrode and a negative electrode to form an electrode group, the separator including: a first surface facing outward of the electrode group and a second surface facing inward of the electrode group, wherein at least one of the first surface and the second surface has a first region including first protrusions arranged in a first pattern, and a second region including second protrusions arranged in a second pattern that differs from the first pattern, and the second region is located on an outer circumferential side of the electrode group relative to the first region.

Still another aspect of the present disclosure relates to a separator having an elongated shape having a length D1 in a first direction and a length D2 (D1 < D2) in a second direction intersecting the first direction, the separator including: a first surface; and a second surface opposite the first surface, wherein at least one of the first surface and the second surface has a first region including first protrusions arranged in a first pattern, and a second region including second protrusions arranged in a second pattern that differs from the first pattern, and the second region is located at a position farther from one end in the second direction than the first region.

### [Advantageous Effects of Invention]

According to the present disclosure, the height of the space for lithium metal deposition can be easily ensured on the inner circumferential side of the wound electrode group of the lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic longitudinal cross-sectional view of an exemplary lithium secondary battery according to an embodiment of the present disclosure.
[FIG.2A] FIG. 2A is a schematic cross-sectional view of a part of the lithium secondary battery illustrated in FIG. 1 on the inner circumferential side.
[FIG.2B] FIG. 2B is a schematic cross-sectional view of a part of the lithium secondary battery illustrated in FIG. 1 on the outer circumferential side.
[FIG.3] FIG. 3 is a top view of an example of first protrusions and second protrusions.
[FIG.4] FIG. 4 is an enlarged view of a part of FIG 3.
[FIG.5] FIG. 5 is a top view of another example of the first protrusions and the second protrusions.
[FIG.6] FIG .6 is a top view of still another example of the first protrusions and the second protrusions.
[FIG.7] FIG. 7 is a top view of yet another example of the first protrusions and the second protrusions.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

### (Lithium Secondary Battery)

A lithium secondary battery according to an embodiment of the present disclosure includes a wound electrode group and a nonaqueous electrolyte. The electrode group includes, for example, a positive electrode, a negative electrode, and a separator each having an elongated shape (band-like shape). The positive electrode and the negative electrode are wound with the separator therebetween. Lithium metal deposits on the negative electrode during charging, and the lithium metal dissolves in the nonaqueous electrolyte during discharging. Specifically, the negative electrode includes at least a negative electrode current collector, and lithium metal deposits on the negative electrode current collector. The nonaqueous electrolyte has lithium ion conductivity. The lithium secondary battery may be also referred to as a lithium-metal secondary battery.

In the lithium secondary battery, for example, 70% or more of the rated capacity is exhibited by deposition and dissolution of lithium metal. Electron migration in the negative electrode during charging and discharging is mainly due to deposition and dissolution of lithium metal in the negative electrode. Specifically, 70 to 100% (e.g., 80 to 100% or 90 to 100%) of the electron migration (in another aspect, current) in the negative electrode during charging and discharging is due to deposition and dissolution of lithium metal. That is, the negative electrode of the lithium secondary battery differs from a negative electrode in which electron migration in the negative electrode during charging and discharging is mainly due to absorption and release of lithium ions of a negative electrode active material (e.g., graphite).

### (Separator)

The separator may have an elongated shape having a length D1 in a first direction parallel to the winding axis and a length D2 (D1 < D2) in a second direction intersecting the first direction. The first direction may be perpendicular to the second direction. The separator has a first surface facing outward (on the outer circumferential side) of the electrode group and a second surface facing inward (on the inner circumferential side) of the electrode group. One of the first surface and the second surface faces the positive electrode and the other faces the negative electrode. At least one of the first surface and the second surface has a first region including first protrusions arranged in a first pattern and a second region including second protrusions arranged in a second pattern that differs from the first pattern. The second region is located on the outer circumferential side of the electrode group relative to the first region.

In other words, the separator has at least two regions: the first region and the second region. The first region is located on the inner circumferential side of the electrode group and the second region is located on the outer circumferential side of the electrode group. The first region may be a region extending from the innermost peripheral end of the first surface or the second surface toward the outer circumferential side. The second region may be a region extending from the outermost peripheral end of the first surface or the second surface toward the inner circumferential side.

The first protrusions and the second protrusions each function as a spacer for space formation between the separator and the electrodes. As a result of lithium metal being accommodated in the space ensured by the first protrusions and the second protrusions, the expansion of the negative electrode during charging is suppressed. The separator may be composed of a substrate layer and a spacer layer. In this case, the spacer layer constitutes the first protrusions and the second protrusions.

The first protrusions and the second protrusions may be provided only on one of the first surface and the second surface that faces the negative electrode, may be provided only on one of the surfaces that faces the positive electrode, or may be provided on both surfaces.

The first protrusions are arranged in the first pattern, and the second protrusions are arranged in the second pattern that differs from the first pattern. The patterns of protrusions include various forms. Either or both the first protrusions and the second protrusions may be linear protrusions. The linear protrusions are formed along a linear pattern. Either or both the first protrusions and the second protrusions may be a dot-shaped or island-shaped protrusions. When at least one of, for example, the line width, diameter, height, density, pitch (a minimum distance between mutually equivalent positions of protrusions), shape (a location where the protrusions are depicted), and direction along the first surface or the second surface is different between the first protrusions and the second protrusions, it can be said that the first pattern and the second pattern differ from each other.

As a result of the first pattern of the first protrusions arranged on the inner circumferential side of the electrode group being differentiated from the second pattern of the second protrusions arranged on the outer circumferential side of the electrode group, the size of space formed on each of the inner circumferential side and the outer circumferential side of the electrode group can be controlled. For example, when a proportion (R1) of the area occupied by the first protrusions in the first region is set larger than a proportion (R2) of the area occupied by the second protrusions in the second region, the function of the first protrusions as a spacer is relatively increased, and space insufficiency on the inner circumferential side of the electrode group can be alleviated. R1 is a proportion (%) of the area where the first region and the first protrusions overlap to the area of the first region when the first surface or the second surface is viewed in plan. R2 is a proportion (%) of the area where the second region and the second protrusions overlap to the area of the second region when the first surface or the second surface is viewed in plan.

R1 and R2 may satisfy 1 < R1/R2, may satisfy 1.1 ≤ R1/R2, or may satisfy 1.2 ≤ R1/R2. From the viewpoint of forming necessary and sufficient space on each of the inner circumferential side and the outer circumferential side, it is preferable to satisfy R1/R2 ≤ 2.5. 1 < R1/R2 ≤ 2.5 may be satisfied, 1.1 ≤ R1/R2 ≤ 2.5 may be satisfied, or 1.2 ≤ R1/R2 ≤ 2.5 may be satisfied. From the viewpoint of ensuring sufficient ion permeability of the separator while enhancing the function of the first protrusions as a spacer, R1 is preferably 5% or more and 30% or less, and more preferably 10% or more and 25% or less.

Instead of setting R1 > R2, an air permeability P1 of the first region may be set lower than an air permeability P2 of the second region. In this case, the function of the first protrusions as a spacer is also enhanced more than that of the second protrusions, and the space insufficiency on the inner circumferential side of the electrode group can be alleviated. The unit of the air permeability is "s/100 mL". The larger the value of the air permeability, the lower the air permeability. P1 and P2 may satisfy 1 < P1/P2, or may satisfy 1.05 ≤ P1/P2. From the viewpoint of forming necessary and sufficient space on each of the inner circumferential side and the outer circumferential side, P1/P2 ≤ 1.5 is preferably satisfied. 1 < P1/P2 ≤ 1.5 may be satisfied, or 1.05 ≤ P1/P2 ≤ 1.5 may be satisfied. In addition to setting R1 > R2, the air permeability P1 of the first region may be set lower than the air permeability P2 of the second region.

The air permeability (air permeability resistance) is an index indicating the time (seconds) required for a predetermined volume (100 mL) of air to pass through the separator per unit area when a predetermined pressure difference is applied between the surfaces of the separator. The air permeability is measured in accordance with JIS P8117:2009 by the Gurley method where the test area (air passing part) of the separator is set to 6.42 cm² and the inner cylinder weight is set to 567 g. The air permeability may be measured by the Oken-type tester method, by which a similar value is obtained.

When the first protrusions and the second protrusions are each linear protrusions, a line width W1 of the first protrusions may be set larger than a line width W2 of the second protrusions. This can relatively enhance the function of the first protrusions as a spacer. W1 and W2 may satisfy 1 < W1/W2, may satisfy 1.1 ≤ W1/W2, or may satisfy 1.2 ≤ W1/W2. From the viewpoint of forming necessary and sufficient space on each of the inner circumferential side and the outer circumferential side, W1/W2 ≤ 4.0 is preferably satisfied. 1 < W1/W2 ≤ 4.0 may be satisfied, 1.1 ≤ W1/W2 ≤ 4.0 may be satisfied, or 1.2 ≤ W1/W2 ≤ 4.0 may be satisfied. From the viewpoint of ensuring sufficient ion permeability of the separator while enhancing the function of the first protrusions as a spacer, W1 is preferably 0.1 mm or more and 2 mm or less, and more preferably 0.25 mm or more and 1 mm or less.

Here, the respective line widths are the dimensions of the linearly extending first protrusions and the second protrusions in a direction perpendicular to the length direction thereof and parallel to the main surface of the separator. For each of the first protrusions and the second protrusions, the line width may be measured at five or more locations and calculated as an arithmetic average of the five or more measured values.

A height H1 of the first protrusions may be set higher than a height H2 of the second protrusions. This can relatively enhance the function of the first protrusions as a spacer. H1 and H2 may satisfy 1 < H1/H2, may satisfy 1.1 ≤ H1/H2, or may satisfy 1.2 ≤ H1/H2. From the viewpoint of forming necessary and sufficient space on each of the inner circumferential side and the outer circumferential side, it is preferable to satisfy H1/H2 ≤ 2.5. 1 < H1/H2 ≤ 2.5 may be satisfied, 1.1 ≤ H1/H2 ≤ 2.5 may be satisfied, or 1.2 ≤ H1/H2 ≤ 2.5 may be satisfied. From the viewpoint of enhancing the function of the first protrusions as a spacer, H1 is preferably 15 µm or more and 100 µm or less, and more preferably 30 µm or more and 70 µm or less.

Here, the respective heights of the first protrusions and the second protrusions are the maximum dimensions of the first protrusions and the second protrusions in the direction parallel to the thickness direction of the separator. For the first protrusions and the second protrusions, each of H1 and H2 may be measured at five or more locations and calculated as an arithmetic average of the five or more measured values. The heights of the protrusions may be measured by photographing a cross section parallel to the thickness direction of the separator using a scanning electron microscope (SEM).

From the viewpoint of enhancing the ionic permeability of the separator, the second region may be set larger than the first region. For example, a length L1 of the first region in the second direction may be 25% or less of a total length L of the separator in the second direction. The first region may be a region having a length of L/4 or less and extending outward from the innermost peripheral end of the first surface or the second surface of the separator, for example. This is because space for lithium deposition tends to be insufficient in the area close to the innermost periphery of the electrode group.

Desirably, the first protrusions and the second protrusions are arranged on the separator in a manner that is as uniform and dispersed as possible. This can reduce parts where lithium metal can locally deposit while suppressing an increase in internal resistance, and can easily restrict the amount of isolated lithium metal to the minimum possible. When any circular region whose diameter has a length of D1/3 (D1 is the length of the band-shaped separator in the first direction (short side direction)) is set on the surface of the separator, it is desirable that a protrusion is present in the circular region such as above at all times.

At least one of the first pattern and the second pattern may be a geometric pattern. The protrusions formed in such a pattern are easily and uniformly arranged on the entire surface of the separator. The geometric pattern may be a network-like pattern. That is, either or both the first protrusions and the second protrusions may be arranged on the entire surface of the separator in the network-like pattern. The network-like pattern may be aggregate of polygons. An example of the network-like pattern includes a shape in which polygons are combined so as to share their sides. Examples of the polygons include triangles, rectangles, and hexagons. Different types of polygons may be combined. Desirably, the geometric pattern has a small anisotropy, such as aggregate of regular polygons. The geometric pattern may be a honeycomb pattern (aggregate of regular hexagons), for example.

At least one of the first pattern and the second pattern may include a dot-like pattern. At least one of the first pattern and the second pattern may be a pattern in which a linear pattern and a dot-like pattern are combined. The planar shape of the dot-shaped protrusions is not particularly limited, and may be a circular shape (e.g., a true circular shape or an elliptical shape) or a polygonal shape (e.g., a triangular shape or a quadrangular shape), for example.

Hereinafter, the separator having the above configuration is referred to as a "separator (A)". Further, the lithium secondary battery having the above configuration is referred to as a "lithium secondary battery (B)". The separator (A) is used in the lithium secondary battery (B). The following describes an example in which the separator is composed of the substrate layer and the spacer layer and the spacer layer constitutes the first protrusions and the second protrusions.

The spacer layer may be formed, for example, by applying a dispersion containing a spacer material to a part of the surface of the substrate layer where the spacer layer is to be formed, followed by drying. In this case, the spacer layer (the first protrusions and the second protrusions) can be bonded to the substrate layer with sufficient strength. The dispersion is applied to the part where the spacer layer is to be formed and then dried. The dispersion may be applied, for example, using a dispenser, or by a known printing method such as gravure printing, inkjet printing, or screen printing. Further, the drying may be performed by a known method such as drying by heating or natural drying.

The dispersion containing the spacer material contains insulative particles, a binder resin, and a thickener, for example. Accordingly, the spacer layer (the first protrusions and the second protrusions) formed from the dispersion contains the insulative particles, the binder resin, and the thickener. The dispersion medium of the dispersion is not particularly limited, and water, an organic solvent, or a mixture of water and the organic solvent may be used, for example. As the organic solvent, N-methyl-2-pyrrolidone (NMP) can be used, for example. Particularly, water is preferably used from the point of view that the environmental load can be reduced.

The shape of the insulative particles is not particularly limited, and may be a spherical shape. However, the spherical shape does not mean an exact true spherical shape, and means a shape having no sharp corners and having an aspect ratio (maximum diameter/maximum diameter in the direction perpendicular to the maximum diameter) in a range of, for example, 1 to 3. The median diameter (i.e., the mean particle diameter) in the volume-based particle size distribution of the insulative particles may be 1.0 µm to 10 µm. The median diameter is the particle diameter when the cumulative volume is 50%. The median diameter of the insulative particles may be 1.0 µm to 2 µm. When the median diameter is within the above range, the dispersed state of the insulative particles in the dispersion is likely to be stably maintained and is maintained even after being applied to the substrate layer. Also, a spacer layer having a homogeneous morphology is likely to be formed.

The median diameter of the particles in the volume-based particle size distribution can be measured, for example, using a laser diffraction/scattering particle size distribution measuring device (e.g., MICROTRAC manufactured by NIKKISO CO., LTD.). Alternatively, it is possible that a cross section of the spacer layer is observed using a transmission electron microscope (TEM), a TEM image is captured, the respective areas surrounded by the outlines of any 100 insulative particles are calculated, the diameters of equivalent circles (true circles) having the same areas as the calculated areas are obtained, and the average of the diameters of the 100 equivalent circles is obtained as the average diameter.

The volume resistivity of the insulative particles may be 1.0 × 10⁸ Ω·cm or more, for example. As a result of the insulative particles having sufficient insulating properties, lithium metal hardly deposits on the spacer layer to promote lithium metal deposition in the intended space. The volume resistivity of the insulative particles may be further large, for example, 1.0 × 10¹⁰ Ω·cm or more.

The volume resistivity can be measured by the four-probe method. For example, it is possible that the insulative particles are pressed at 204 Kgf/cm² and measured using a powder resistivity meter (e.g., LORESTA SP manufactured by Nittoseiko Analytech Co., Ltd.)

Examples of the insulative particles include inorganic particles of metal oxides, metal hydroxides, metal nitrides, metal carbides, and metal sulfides. Examples of the metal oxides include aluminum oxide (alumina or boehmite), magnesium oxide, titanium oxide (titania), zirconium oxide, and silicon oxide (silica). Examples of the metal hydroxides include aluminum hydroxide. Examples of the metal nitrides include silicon nitride, aluminum nitride, boron nitride, and titanium nitride. Examples of the metal carbides include silicon carbide and boron carbide. Examples of the metal sulfides include barium sulfate. A mineral such as aluminosilicate, layered silicate, barium titanate, or strontium titanate may be used, for example. Among these, alumina, silica, or titania is preferably used, for example.

The content of the insulative particles in the spacer layer is, for example, less than 80% by volume, and preferably 50 to 70% by volume. The content (volume percentage) of the insulative particles in the spacer layer may be determined by observing a cross section of the spacer layer using a transmission electron microscope (TEM), capturing a TEM image, calculating the sum of the respective areas surrounded by the outlines of insulative particles in any field of view having an area of 10 µm², and determining the volume ratio as a ratio of the calculated total area to the area of the field of view. At that time, it is desirable to calculate volume ratios in three or more fields of view and calculate an average value thereof.

Examples of the binder resin include fluorocarbon resin, fluorocarbon rubber, styrenebutadiene copolymers and hydrides thereof, acrylonitrile-butadiene copolymers and hydrides thereof, methacrylic acid ester-acrylic acid ester copolymers, styrene-acrylic acid ester copolymers, acrylonitrile-acrylic acid ester copolymers, ethylene propylene rubber, polyphenylene ether, polysulfone, polyether sulfone, polyphenylene sulfide, polyetherimide, polyimide, polyamides such as wholly aromatic polyamide (aramid), polyimide, polyamideimide, polyacrylonitrile, polyether, polyolefin, and alkyd resin.

The amount of the binder resin may be, for example, 20 to 100 parts by volume relative to 100 parts by volume of the insulative particles, may be 20 to 80 parts by volume, may be 20 to 70 parts by volume, or may be 25 to 50 parts by volume. In the above ranges, the mechanical strength of the spacer layer can be easily increased, and the bonding strength between the substrate layer and the spacer layer can be easily increased.

The thickener may contain, for example, at least one selected from the group consisting of carboxymethyl cellulose and carboxymethyl cellulose salt (hereinafter, at least one selected from the group consisting of carboxymethyl cellulose and carboxymethyl cellulose salt is also referred to as "CMC"). When carboxymethylcellulose salt is used as the CMC, sodium salt, lithium salt, potassium salt, or ammonium salt can be used, for example. Among these, carboxymethyl cellulose salt preferably includes sodium salt.

In order to fully elicit the function of the CMC, it is desirable that the dispersion medium of the dispersion of the spacer material contains water. The water content may be 50% by mass or more of the dispersion medium, may be 70% by mass or more, may be 80% by mass or more, or may be 90% by mass or more.

The amount of the CMC may be, for example, 0.5 to 5 parts by volume relative to 100 parts by volume of the insulative particles, or may be 1 to 3 parts by volume. As a result of use of the CMC within the above range, a sufficient thickening effect of the CMC can be exhibited.

### <Substrate Layer>

As the substrate layer, a porous sheet having ion permeability and insulating properties is used. Examples of the porous sheet include a microporous thin film, a woven fabric, and a nonwoven fabric. The material of the porous sheet is not particularly limited, and may be a polymer material. Examples of the polymer material include olefin resin, polyamide resin, and cellulose. Examples of the olefin resin include polyethylene, polypropylene, and copolymers of ethylene and propylene. The substrate layer may contain an additive, as necessary. Examples of the additive include inorganic fillers.

The thickness of the substrate layer is not particularly limited, and is, for example, 5 µm or more and 20 µm or less, and more preferably 10 µm or more and 20 µm or less.

The substrate layer may include a porous sheet and a composite material layer. The composite material layer may be formed on one of the main surfaces or each main surface of the porous sheet. The composite material layer is a layer that transmits lithium ions. The thickness of the composite material layer may be 5% to 50% of the total thickness of the separator.

The composite material layer contains a resin material and inorganic particles. The inorganic particles may include either or both first particles and second particles. The first particles are particles of lithium-containing phosphate. The first particles suppress heat generation in batteries in an abnormal state. The second particles are particles other than the first particles.

When the composite material layer is formed on only one of the main surfaces of the porous sheet, the composite material layer is preferably positioned on the main surface of the porous sheet that faces the positive electrode. As a result of the composite material layer being positioned to face the positive electrode, degradation of the porous sheet due to oxidation reaction can be suppressed. As a result of the composite material layer being positioned to face the negative electrode by contrast, degradation of the porous sheet due to reduction can be suppressed.

The phosphate constituting the first particles may be at least one selected from the group consisting of lithium phosphate (Li₃PO₄), dilithium hydrogen phosphate (Li₂HPO₄), and lithium dihydrogen phosphate (LiH₂PO₄). Among these, lithium phosphate is preferable from the viewpoint of being highly effective in suppressing heat generation in batteries in an abnormal state. The median diameter of the first particles in the volume-based particle size distribution may be 0.1 µm to 1.0 µm.

A preferred example of the second particles is a type composed of an insulative inorganic compound that neither melts nor decomposes upon abnormal heat generation in batteries. Examples of the material of the second particles include oxides, hydroxides, nitrides, carbides, and sulfides. Examples of the oxides include aluminum oxide, boehmite, magnesium oxide, titanium oxide, zirconium oxide, silicon oxide, yttrium oxide, and zinc oxide. Examples of the nitrides include silicon nitride, aluminum nitride, boron nitride, and titanium nitride. Examples of the carbides include silicon carbide and boron carbide. Examples of the sulfides include barium sulfate. Examples of the hydroxides include aluminum hydroxide. The median diameter of the second particles in the volume-based particle size distribution may be 0.2 to 2.0 µm.

The median diameter of the particles in the volume-based particle size distribution can be measured, for example, using a laser diffraction/scattering particle size distribution measuring device (e.g., MICROTRAC manufactured by NIKKISO CO., LTD.). Alternatively, it is possible that a cross section of the substrate layer is observed using a transmission electron microscope (TEM), a TEM image is captured, the respective areas surrounded by the outlines of any 100 first particles or second particles are calculated, the diameters of equivalent circles (true circles) having the same areas as the calculated areas are obtained, and the average of the diameters of the 100 equivalent circles is obtained as the average diameter.

As the resin material, a polymer material having a heat resistance higher than that of the porous sheet is preferably used. The polymer material such as above preferably includes at least one selected from the group consisting of aromatic polyamide, aromatic polyimide, and aromatic polyamideimide. These are known as polymer materials that have high heat resistance. In terms of heat resistance, an aramid, that is, a meta-aramid (wholly aromatic meta-polyamide) or a paraaramid (wholly aromatic para-polyamide) is preferable.

The content of the inorganic particles in the composite material layer may be in the range of 50% by mass to 99% by mass (e.g., in the range of 85% by mass to 99% by mass).

### (Negative Electrode)

The negative electrode includes a negative electrode current collector. In the lithium secondary battery, lithium metal deposits on the surface of the negative electrode by charging. More specifically, lithium ions contained in the nonaqueous electrolyte receive electrons on the negative electrode by charging to become lithium metal and the lithium metal deposits on the surface of the negative electrode. The lithium metal deposited on the surface of the negative electrode dissolves in the nonaqueous electrolyte as lithium ions by discharging.

The negative electrode may include a lithium ion absorption layer (a layer exhibiting capacity by a negative electrode active material (e.g., graphite) absorbing and releasing lithium ions) supported on the negative electrode current collector. In this case, the open-circuit potential of the negative electrode in the fully charged state may be 70 mV or less relative to the lithium metal (the dissolution and deposition potential of lithium). When the open-circuit potential of the negative electrode in the fully charged state is 70 mV or less relative to the lithium metal, lithium metal is present on the surface of the lithium ion absorption layer in the fully charged state. That is, the negative electrode exhibits capacity by lithium metal deposition and dissolution.

Here, the fully charged state is a state of a battery charged until a state of charge of, for example, 0.98 × C or more is achieved, where C represents the rated capacity of the battery. The open-circuit potential of the negative electrode in the fully charged state may be measured by disassembling a battery in the fully charged state in an argon atmosphere to take out the negative electrode, and assembling a cell with the negative electrode and a lithium metal as a counter electrode. The nonaqueous electrolyte in the cell may have the same composition as the nonaqueous electrolyte in the disassembled battery.

The lithium-ion absorption layer is a layer formed by forming a negative electrode mixture containing a negative electrode active material into a layer shape. The negative electrode mixture may contain, for example, a binder, a thickener, and a conductive agent in addition to the negative electrode active material.

Examples of the negative electrode active material include carbonaceous materials, Si-containing materials, and Sn-containing materials. The negative electrode may contain one negative electrode active material, or may contain two or more negative electrode active materials in combination. Examples of the carbonaceous materials include graphite, graphitizable carbon (soft carbon), and non-graphitizable carbon (hard carbon).

The conductive material is a carbon material, for example. Examples of the carbon material include carbon black, acetylene black, Ketjen black, carbon nanotubes, and graphite.

Examples of the binder include fluorocarbon resin, polyacrylonitrile, polyimide resin, acrylic resin, polyolefin resin, and rubbery polymer. Examples of the fluorocarbon resin include polytetrafluoroethylene and polyvinylidene fluoride.

The negative electrode current collector may be a conductive film. As a conductive sheet, a foil or a film is used, for example.

The material of the negative electrode current collector (conductive sheet) may be a conductive material other than lithium metal and lithium alloys. The conductive material may be a metal material such as a metal or an alloy. The conductive material is preferably a material that does not react with lithium. More specifically, a material that does not form either an alloy or an intermetallic compound with lithium is preferable. Examples of the conductive material such as above include copper (Cu), nickel (Ni), iron (Fe), alloys containing any of these metallic elements, and graphite whose basal plane is preferentially exposed. Examples of the alloys include copper alloys and stainless steel (SUS). Among these, either or both copper and a copper alloy, which have high conductivity, are preferable.

The thickness of the negative electrode current collector is not particularly limited, and is 5 µm or more and 300 µm or less, for example.

### (Positive Electrode)

The positive electrode includes a positive electrode current collector and a positive electrode mixture layer supported on the positive electrode current collector, for example. The positive electrode mixture layer contains a positive electrode active material, a conductive material, and a binder, for example. The positive electrode mixture layer may be formed on only one or both surfaces of the positive electrode current collector. The positive electrode can be obtained, for example, by applying a positive electrode mixture slurry containing a positive electrode active material, a conductive material, and a binder to both surfaces of the positive electrode current collector, followed by drying and rolling the applied film.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, a lithium-containing transition metal oxide is preferable due to its low manufacturing costs and a high-average discharge voltage.

Lithium contained in a lithium-containing transition metal oxide is released from the positive electrode as lithium ions during charging and deposits on the negative electrode or the negative electrode current collector as lithium metal. During discharging, the lithium metal dissolves from the negative electrode and releases lithium ions to be absorbed in the composite oxide of the positive electrode. That is, the lithium ions involved in charging and discharging are generally derived from the solute of the nonaqueous electrolyte and the positive electrode active material.

Examples of a transition metal element contained in the lithium-containing transition metal oxide include Sc, Ti, V, Cr, Mn, Fe, Co, Ni, Cu, Y, Zr, and W. The lithium-containing transition metal oxide may contain one transition metal element or two or more transition metal elements. The transition metal element may include Co and either or both Ni and Mn. The lithium-containing transition metal oxide can contain one or more typical elements, as necessary. Examples of the typical elements include Mg, Al, Ca, Zn, Ga, Ge, Sn, Sb, Pb, and Bi. One such element may be Al, for example.

Among lithium-containing transition metal oxides, a composite oxide that contains Co and either or both Ni and Mn as transition metal elements, that may contain Al as an optional component, and that has a rock-salt-type crystalline structure with a layered structure is preferable from the viewpoint of achieving high capacity. In the lithium secondary battery in this case, the molar ratio: mLi/mM of a total amount mLi of lithium in the positive electrode and the negative electrode to an amount mM of a metal M contained in the positive electrode other than lithium is set to 1.1 or less, for example.

As the binder, the conductive agent, and the like, those exemplified for the negative electrode can be used, for example. The shape and thickness of the positive electrode current collector can be selected according to the shape and the range for the positive electrode current collector, respectively.

Examples of the material of the positive electrode current collector (conductive sheet) include metallic materials containing Al, Ti, or Fe, for example. The metallic material may be Al, an Al alloy, Ti, a Ti alloy, or an Fe alloy, for example. The Fe alloy may be stainless steel (SUS).

The thickness of the positive electrode current collector is not particularly limited, and is, for example, 5 µm or more and 300 µm or less.

### (Nonaqueous Electrolyte)

The nonaqueous electrolyte having lithium ion conductivity may be a liquid electrolyte (electrolyte solution), a gel electrolyte, or a solid electrolyte. The liquid electrolyte is an electrolyte solution containing a nonaqueous solvent and a lithium salt dissolved in the nonaqueous solvent, for example. The concentration of the lithium salt in the electrolyte solution is 0.5 mol/L or more and 2 mol/L or less, for example. The electrolyte solution may contain a known additive.

The gel electrolyte contains a lithium salt and a matrix polymer, or contains a lithium salt, a nonaqueous solvent, and a matrix polymer. As the matrix polymer, a polymer material that absorbs the nonaqueous solvent to gel is used, for example. Examples of the polymer material include fluorocarbon resin, acrylic resin, polyether resin, and polyethylene oxide.

As the solid electrolyte, a material (e.g., oxide-based solid electrolytes, sulfide-based solid electrolytes, and halide-based solid electrolytes) known in the field of all-solid-state lithium-ion secondary batteries is used, for example.

The liquid nonaqueous electrolyte is prepared by dissolving a lithium salt in a nonaqueous solvent. The lithium salt dissolves in the nonaqueous solvent to form lithium ions and anions.

Examples of the anions include BF₄⁻, ClO₄⁻, PF₆⁻, CF₃SO₃⁻, CF₃CO₂⁻, anions of imides, and anions of oxalate complexes. Examples of the anions of the imides include N(SO₂CF₃)₂⁻ and N(CₘF₂ₘ₊₁SO₂)ₓ(CₙF₂ₙ₊₁SO₂)_{y}⁻ (m and n are each independently 0 or an integer of 1 or more, x and y are each independently 0, 1 or 2, and x + y = 2 is satisfied). The anions of the oxalate complexes may contain either or both boron and phosphorus. Examples of the anions of the oxalate complexes include a bis(oxalate)borate anions, difluoro(oxalate)borate anions (BF₂(C₂O₄)⁻), PF₄(C₂O₄)⁻, and PF₂(C₂O₄)₂⁻. The nonaqueous electrolyte may contain one type of anions alone among these or may contain two or more types thereof.

From the viewpoint of suppressing the deposition of lithium metal in a dendrite state, the nonaqueous electrolyte preferably contains at least anions of an oxalate complex, and desirably contains oxalate complex anions having fluorine. By the interaction between lithium and the oxalate complex anions having fluorine, lithium metal is likely to deposit uniformly in a fine particle form. As a result, local deposition of the lithium metal is likely to be suppressed. The oxalate complex anions having fluorine may be used in combination with another type of anions. The other type of anions may be anions of either or both PF₆⁻ and an imide.

Examples of the nonaqueous solvent include esters, ethers, nitrites, amides, and halogenated substituents of these. The nonaqueous electrolyte may contain one of these nonaqueous solvents alone, or may contain two or more thereof. Examples of the halogenate substituents include fluorides.

Examples of the esters include carbonate esters and carboxylic acid esters. Examples of cyclic carbonate esters include ethylene carbonate, propylene carbonate, and fluoroethylene carbonate (FEC). Examples of chain carbonate esters include dimethyl carbonate (DMC), ethyl methyl carbonate (EMC), and diethyl carbonate. Examples of cyclic carboxylic acid esters include γ-butyrolactone and γ-valerolactone. Examples of chain carboxylic acid esters include ethyl acetate, methyl propionate, and methyl fluoropropionate.

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is 0.5 mol/L or higher, and 3.5 mol/L or lower, for example. The concentration of the anions in the nonaqueous electrolyte may be set to 0.5 mol/L or higher and 3.5 mol/L or lower. The concentration of the anions of an oxalate complex in the nonaqueous electrolyte may be set to 0.05 mol/L or higher and 1 mol/L or lower.

The nonaqueous electrolyte may contain an additive. The additive may be one that forms a coating film on the negative electrode. As a result of a coating film derived from the additive being formed on the negative electrode, generation of dendrites is likely to be suppressed. Examples of such an additive include vinylene carbonate, FEC, and vinyl ethyl carbonate (VEC).

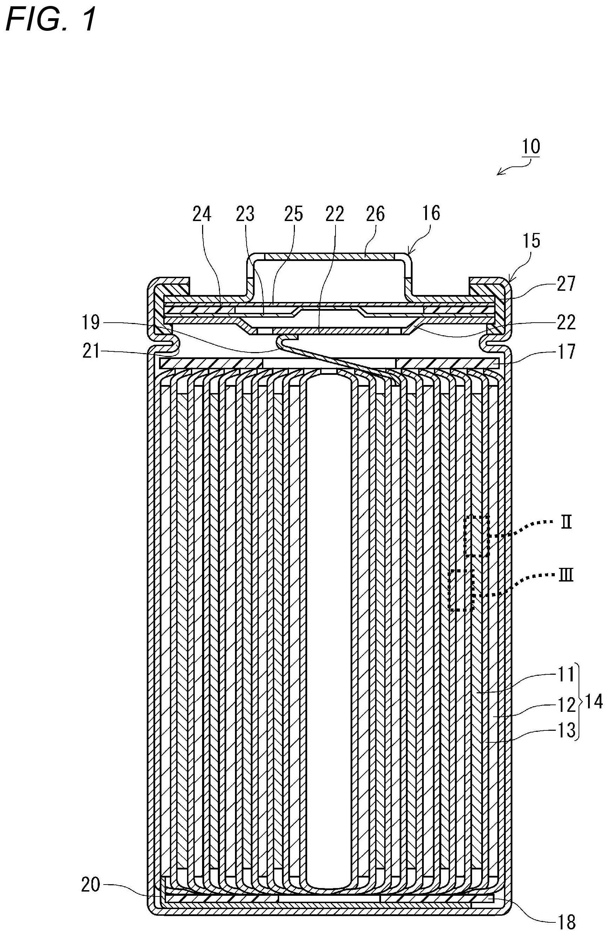

The following provides a description with reference to the drawings. FIG. 1 is a schematic longitudinal cross-sectional view of an example of the lithium secondary battery (B). The above-described constituent elements can be applied to the constituent elements of the lithium secondary battery (B) described below. The constituent elements described below can be altered based on the above description. In the lithium secondary battery described below, a constituent element that is not essential to the lithium secondary battery according to the present disclosure may be omitted. In the drawings mentioned below, the constituent elements are scaled to facilitate understanding.

### (First Embodiment)

FIG. 1 is a schematic longitudinal cross-sectional view of an example of a lithium secondary battery according to a first embodiment. In FIG. 1, the spacer layer (the first protrusions and the second protrusions) and space formed by the spacer layer are omitted. A cylindrical lithium secondary battery 10 illustrated in FIG. 1 includes a cylindrical battery case and a wound electrode group 14 and a nonaqueous electrolyte each housed in the battery case. The battery case includes a case main body 15 that is a bottomed cylindrical metal container, and a sealing body 16 that seals the opening of the case main body 15. A gasket 27 is provided between the case main body 15 and the sealing body 16. The gasket 27 ensures that the battery case is sealed. In the case main body 15, insulation plates 17 and 18 are provided at the respective ends of the electrode group 14 in the winding axis direction.

The case main body 15 has a step 21 formed, for example, by partially pressing the side wall of the case main body 15 from the outside. The step 21 may be formed in an annular shape on the side wall of the case main body 15 along the circumference of the case main body 15. In this case, the sealing body 16 is supported on the surface of the step 21 on the side of the opening.

The sealing body 16 includes a filter 22, a lower valve body 23, an insulating member 24, an upper valve body 25, and a cap 26. In the sealing body 16, these members are stacked in the stated order. The sealing body 16 is attached to the opening of the case main body 15 such that the cap 26 is located outside the case main body 15 and the filter 22 is located inside the case main body 15. Each of the above-described members constituting the sealing body 16 has a disk shape or a ring shape, for example. The lower valve body 23 and the upper valve body 25 are connected to each other at their central parts, and the insulating member 24 is located between their peripheral parts. The filter 22 and the lower valve body 23 are connected to each other at their central parts. The upper valve body 25 and the cap 26 are connected to each other at their central parts. That is, these members except the insulating member 24 are electrically connected to each other.

A non-illustrated vent hole is formed in the lower valve body 23. In the above configuration, when the internal pressure of the battery case increases due to abnormal heat generation or the like, the upper valve body 25 bulges toward the cap 26 to separate from the lower valve body 23. As a result, electrical connection between the lower valve body 23 and the upper valve body 25 is cut off. When the internal pressure further increases, the upper valve body 25 is broken to release gas from a non-illustrated opening formed in the cap 26.

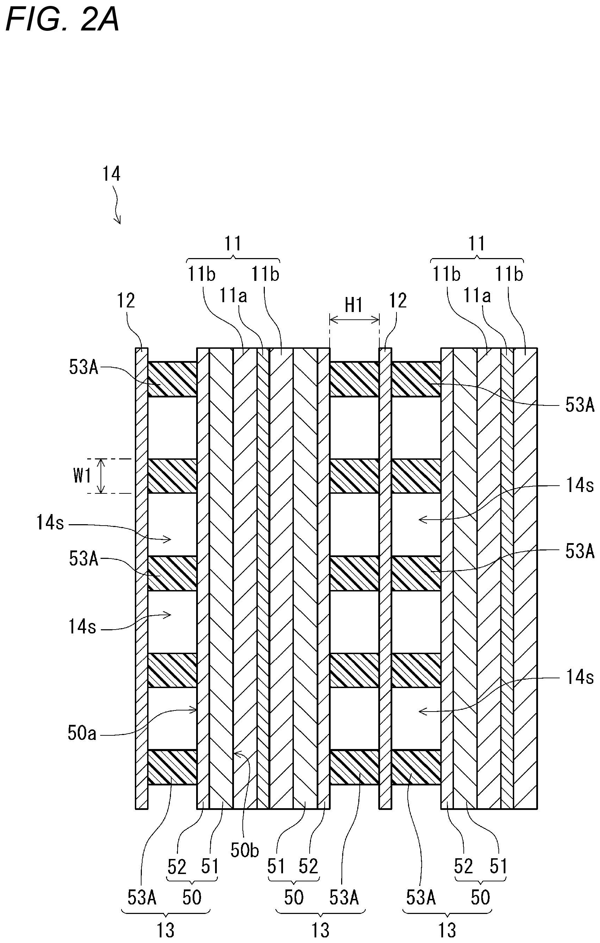

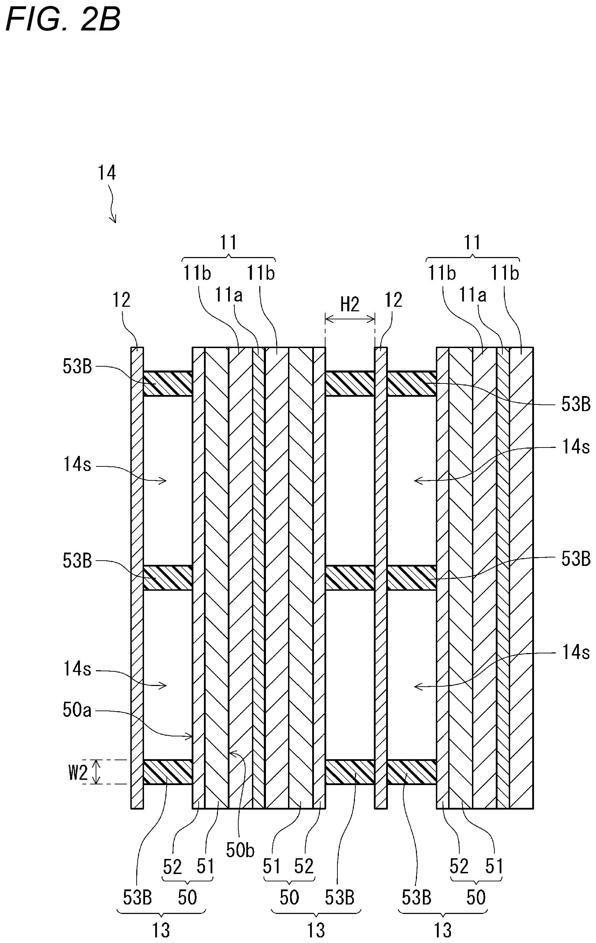

FIG. 2A is an enlarged view of a part of the separator where the first region (e.g., a region corresponding to the second to third turns from the innermost periphery) on the inner circumferential side of the electrode group 14 is located. FIG. 2B is an enlarged view of a part of the separator where the second region (e.g., a region corresponding to the second to third turns from the outermost periphery) on the outer circumferential side of the electrode group 14 is located. FIGS. 2A and 2B illustrate a part near the positive electrode surrounded by a region II of FIG. 1 and a part near the negative electrode surrounded by a region III of FIG. 1, respectively.

The electrode group 14 includes a positive electrode 11, a negative electrode 12, and a separator 13. Each of the positive electrode 11, the negative electrode 12, and the separator 13 has a band shape. The separator 13 includes a substrate layer 50 and spacer layers 53A and 53B formed on the substrate layer 50. The spacer layer 53A, which is located on the inner circumferential side of the electrode group 14, constitutes the first protrusions. The spacer layer 53A (first protrusions) is formed in a first pattern. The spacer layer 53, which is located on the outer circumferential side of the electrode group 14, constitutes the second protrusions. The spacer layer 53B (second protrusions) is formed in a second pattern. The first pattern and the second pattern differ from each other, and the line width W1 of the first protrusions is wider than the line width W2 of the second protrusions. The proportion R1 of the area occupied by the spacer layer 53A (the first protrusions) in the first region is larger than the proportion R2 of the area occupied by the spacer layer 53B (the second protrusions) in the second region. Accordingly, the air permeability P1 of the first region is lower than the air permeability P2 of the second region.

The substrate layer 50 includes a porous sheet 51 and a composite material layer 52. The spacer layer 53 is formed on the composite material layer 52. The positive electrode 11, the negative electrode 12, and the separator 13 are wound such that the separator 50 is located between the positive electrode 11 and the negative electrode 12, thereby forming the electrode group 14.

The positive electrode 11 includes a positive electrode current collector 11a and a positive electrode mixture layer 11b. The positive electrode current collector 11a is electrically connected via a positive electrode lead 19 to the cap 26 that functions as a positive electrode terminal. FIG. 2 illustrates, as the negative electrode 12, a negative electrode (negative electrode current collector) on which no lithium metal deposits. The negative electrode 12 is electrically connected via a negative electrode lead 20 to the case main body 15 that functions as a negative electrode terminal.

As illustrated in FIGS. 2A and 2B, the separator 13 has a first main surface 50a facing the negative electrode 12 and a second main surface 50b facing the positive electrode 11. In the exemplary embodiment illustrated in FIGS. 2A and 2B, the spacer layer 53 is formed on the first main surface 50a.

The composite material layer 52 is formed on one of the two main surfaces of the porous sheet 51 that faces the negative electrode 12 In the first embodiment, but the composite material layer 52 may be omitted or may be formed on each of the two main surfaces of the porous sheet 51. The spacer layer 53 is formed on the composite material layer 52 and is in contact with the negative electrode 12. A space 14s is formed by the spacer layer 53 between the positive electrode 11 and the negative electrode 12 (between the negative electrode 12 and the separator 13). FIG. 2A indicates the line width W1 and the height H1 of the spacer layer 53A (first protrusions). FIG. 2B indicates the line width W2 and the height H2 of the spacer layer 53B (second protrusions). In the present embodiment, W1 > W2 is satisfied and H1 and H2 are equal to each other. However, the present disclosure is not limited thereto, and H1 > H2 may be satisfied, for example. The proportion R1 of the area occupied by the spacer layer 53A (first protrusions) in the first region is larger than the proportion R2 of the area occupied by the second protrusions in the second region.

In the lithium secondary battery 10, lithium metal deposits on the negative electrode 12 during charging. Since the space 14s is present between the positive electrode 11 and the negative electrode 12, the volume change of the electrode group 14 due to the deposition of lithium metal is reduced and cycle characteristics are improved.

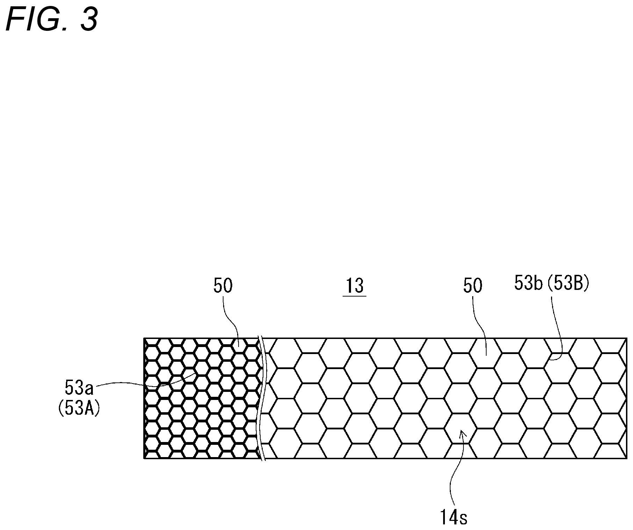

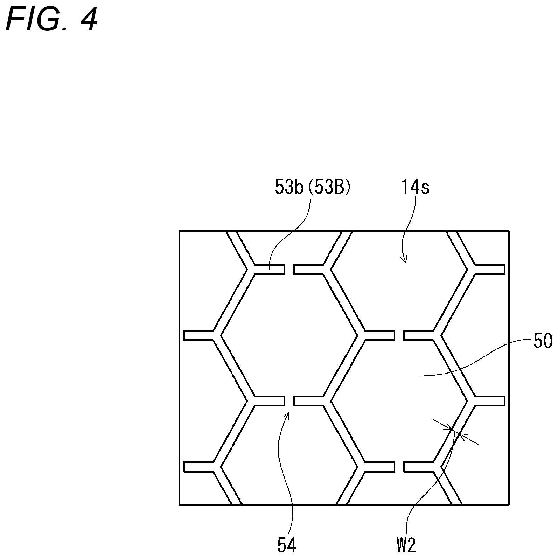

FIG. 3 illustrates an example of the planar shapes of the spacer layers 53A and 53B. FIG. 4 is an enlarged view of a part (the spacer layer 53B) of FIG. 3. In the example illustrated in FIG. 3, the left end is the innermost peripheral end. In the first region including the end, the spacer layer 53A constitutes linear first protrusions 53a having a wide line width. On the other hand, the right end is the outermost peripheral end. In the second region including the end, the spacer layer 53B constitutes linear second protrusions 53b having a narrow line width. The linear first protrusions 53a and the linear second protrusions 53b are arranged in a mesh shape. More specifically, the protrusions are uniformly formed in a honeycomb pattern having a narrow pitch in the first region, and are uniformly formed in a honeycomb pattern having a wide pitch in the second region. The honeycomb patterns are patterns in which a plurality of hexagons are arranged so as to share their sides with each other. The region where neither the linear first protrusions 53a nor the second protrusions 53b are formed forms the space 14s. FIG. 4 indicates the width W2 of the linear second protrusions 53b. The width W2 of the linear second protrusions is the length (width) of the linear second protrusions 53b in the direction perpendicular to the direction in which the linear second protrusions 53b extend in a plan view.

In FIG. 4, cutouts 54 are formed in the linear second protrusions 53b. The cutouts 54 facilitate the migration of ions in the nonaqueous electrolyte. In a pattern in which a plurality of polygons are arranged so as to share their sides with each other, it is preferable to provide the cutouts 54.

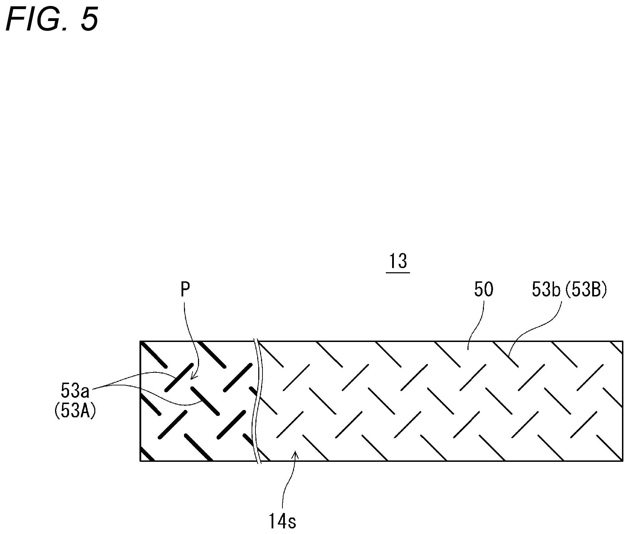

FIGS. 5 to 7 illustrate other examples of the first protrusions 53a and the second protrusions 53b in a plan view. In any of the examples, the proportion R1 of the area occupied by the spacer layer 53A (first protrusions) in the first region is larger than the proportion R2 of the area occupied by the second protrusions in the second region.

In FIG. 5, the spacer layer 53A includes a plurality of linear first protrusions 53a arranged in alternating intersecting directions, and the spacer layer 53B includes a plurality of linear second protrusions 53b arranged in alternating intersecting directions. Gaps P are present between the plurality of first protrusions 53a and between the plurality of second protrusions 53b. The region where the linear protrusions are not formed forms the space 14s. The line width of the first protrusions 53a is wide, and the line width of the second protrusions 53b is narrow.

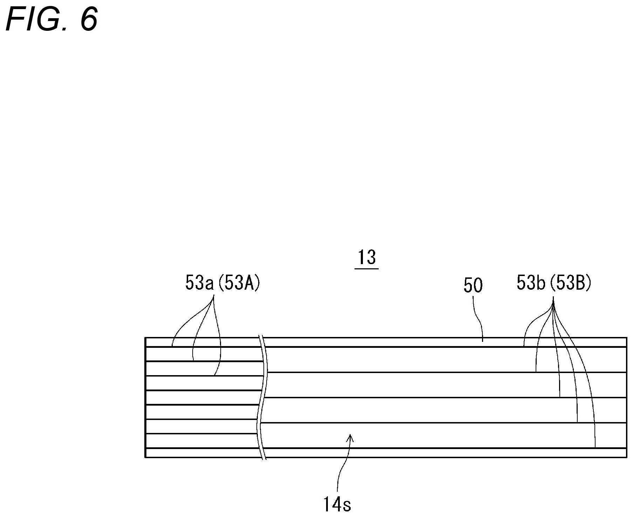

In FIG. 6, the spacer layer 53A includes a plurality of linear first protrusions 53a arranged in a stripe pattern and extending in the second direction, and the spacer layer 53B includes a plurality of linear second protrusions 53b arranged in a stripe pattern and extending in the second direction. The number of the first protrusions 53a is smaller than the number of the second protrusions 53b, and the pitch between the first protrusions 53a is narrower than the pitch between the second protrusions 53b.

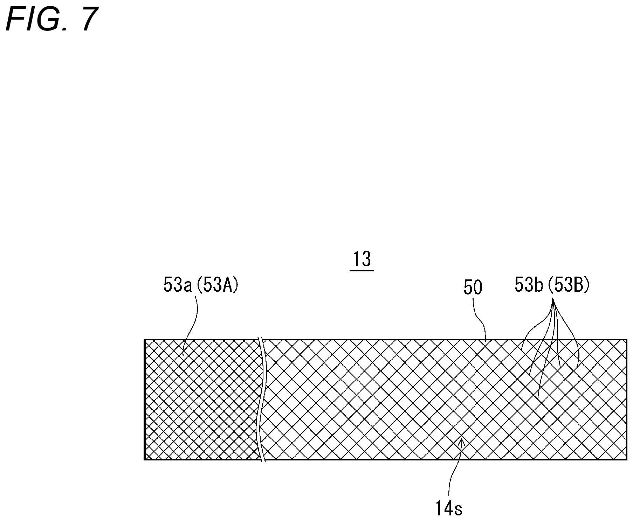

In FIG. 7, the spacer layer 53A includes linear first protrusions 53a arranged in a grid pattern (mesh pattern), and the spacer layer 53B includes linear second protrusions 53b arranged in a grid pattern (mesh pattern). The grid spacing of the first protrusions 53a is smaller than the grid spacing of the second protrusions 53b.

The combination of the first protrusions and the second protrusions is not limited to the illustrated examples. For example, it is possible that the first protrusions are formed in a honeycomb pattern, while the second protrusions are formed in a pattern other than a honeycomb pattern.

### <<Supplemental Note>>

According to the above description of the embodiments, the following techniques are disclosed.

### (Technique 1)

A lithium secondary battery including:
an electrode group; and a nonaqueous electrolyte,
wherein the electrode group includes a positive electrode, a negative electrode, and a separator,
the positive electrode and the negative electrode are wound with the separator therebetween,
in the negative electrode, lithium metal deposits during charging and the lithium metal dissolves in the nonaqueous electrolyte during discharging,
the separator has a first surface facing outward of the electrode group and a second surface facing inward of the electrode group,
at least one of the first surface and the second surface has a first region including first protrusions arranged in a first pattern, and a second region including second protrusions arranged in a second pattern that differs from the first pattern, and
the second region is located on an outer circumferential side of the electrode group relative to the first region.

### (Technique 2)

The lithium secondary battery according to Technique 1, wherein a proportion of an area occupied by the first protrusions in the first region is larger than a proportion of an area occupied by the second protrusions in the second region.

### (Technique 3)

The lithium secondary battery according to Technique 1 or 2, wherein an air permeability of the first region is lower than an air permeability of the second region.

### (Technique 4)

The lithium secondary battery according to any one of Techniques 1 to 3, wherein both the first protrusions and the second protrusions are linear protrusions, and
a line width of the first protrusions is wider than a line width of the second protrusions.

### (Technique 5)

The lithium secondary battery according to any one of Techniques 1 to 4, wherein a height of the first protrusions is higher than a height of the second protrusions.

### (Technique 6)

The lithium secondary battery according to any one of Techniques 1 to 5, wherein the separator has an elongated shape having a length D1 in a first direction parallel to a winding axis and a length D2 (D1 < D2) in a second direction intersecting the first direction, and
a length of the first region in the second direction is 25% or less of a total length of the separator in the second direction.

### (Technique 7)

The lithium secondary battery according to any one of Techniques 1 to 6, wherein at least one of the first pattern and the second pattern is a geometric pattern.

### (Technique 8)

A separator wound between a positive electrode and a negative electrode to form an electrode group, the separator including:
a first surface facing outward of the electrode group and a second surface facing inward of the electrode group,
wherein at least one of the first surface and the second surface has a first region including first protrusions arranged in a first pattern, and a second region including second protrusions arranged in a second pattern that differs from the first pattern, and
the second region is located on an outer circumferential side of the electrode group relative to the first region.

### (Technique 9)

The separator according to Technique 8, wherein a proportion of an area occupied by the first protrusions in the first region is larger than a proportion of an area occupied by the second protrusions in the second region.

### (Technique 10)

The separator according to Technique 8 or 9, wherein an air permeability of the first region is lower than an air permeability of the second region.

### (Technique 11)

The separator according to any one of Techniques 8 to 10, wherein both the first protrusions and the second protrusions are linear protrusions, and
a line width of the first protrusions is wider than a line width of the second protrusions.

### (Technique 12)

The separator according to any one of Techniques 8 to 11, wherein a height of the first protrusions is higher than a height of the second protrusions.

### (Technique 13)

The separator according to any one of Techniques 8 to 12, wherein the separator has an elongated shape having a length D1 in a first direction parallel to a winding axis and a length D2 (D1 < D2) in a second direction intersecting the first direction, and
a length of the first region in the second direction is 25% or less of a total length of the separator in the second direction.

### (Technique 14)

The separator according to any one of Techniques 8 to 13, wherein at least one of the first pattern and the second pattern is a geometric pattern.

### (Technique15)

A separator having an elongated shape having a length D1 in a first direction and a length D2 (D1 < D2) in a second direction intersecting the first direction, the separator including:
a first surface; and a second surface opposite the first surface,
wherein at least one of the first surface and the second surface has a first region including first protrusions arranged in a first pattern, and a second region including second protrusions arranged in a second pattern that differs from the first pattern, and
the second region is located at a position farther from one end in the second direction than the first region.

### [Examples]

Hereinafter, the lithium secondary battery according to the present disclosure is described in more detail based on examples and comparative examples. However, the present disclosure is not limited to the following examples.

### <<Example 1>>

### (1) Positive Electrode Production

A positive electrode mixture slurry was prepared by mixing a lithium-containing transition metal oxide (NCA: positive electrode active material) containing Li, Ni, Co, and Al (molar ratio of Li to the total of Ni, Co, and Al is 1.0) and having a rock-salt-type structure with a layered structure, acetylene black (AB: conductive material), and polyvinylidene fluoride (PVdF: a binder) in a mass ratio NCA:AB:PVdF of 95:2.5:2.5, and further adding N-methyl-2-pyrrolidone (NMP) under stirring. The resulting positive electrode mixture slurry was applied to both sides of a band-shaped Al foil (positive electrode current collector), and dried, and the formed coating film of the positive electrode mixture was then rolled using a roller. Finally, the resulting laminate of the positive electrode current collector and the positive electrode mixture was cut to a predetermined electrode size to obtain a positive electrode including a positive electrode mixture layer on each side of the positive electrode current collector.

### (2) Negative Electrode Production

A band-shaped electrolytic copper foil (15-µm thick) was prepared as a negative electrode current collector.

### (3) Separator

### (3-1) Substrate Layer (Porous Sheet)

A polyethylene-made microporous thin film having a thickness of 20 µm was prepared.

### (3-2) Spacer Layer Formation on Main Surface of Substrate Layer

A dispersion of a spacer material was prepared by mixing 50 parts by volume of insulative particles (median diameter: 3 µm, volume resistivity: 10¹⁴ Ω·cm), 50 parts by volume of polyvinylidene fluoride (PVdF) being a binder resin, and N-methyl-2-pyrrolidone (NMP) being a dispersion medium.

Next, the dispersion of the spacer material was discharged onto the microporous thin film using a dispenser to form honeycomb patterns, and the resulting coating film was vacuum-dried to form first protrusions and second protrusion. Specifically, one (first main surface) of the surfaces of the microporous thin film was divided into a first region and a second region, the first protrusions were uniformly formed in a first honeycomb pattern on the first region, and the second protrusions were uniformly formed in a second honeycomb pattern on the second region.

Given that L represents the total length of the substrate layer in the second direction, the first region was set as a region having a length of L/4 and extending from the innermost peripheral end toward the outer circumferential side on the first surface of the substrate layer. That is, the length L1 of the first region in the second direction was set to 25% of the total length L of the substrate layer (i.e., the separator) in the second direction.

The line widths and heights were the same between the first protrusions and the second protrusions. W1 and W2 were set to 0.5 mm and H1 and H2 were set to 50 µm.

In the first pattern, the interval (pitch) between each pair of opposite sides of each regular hexagon was set to 5 mm. While in the second pattern, the interval (pitch) between each pair of opposite sides of each regular hexagon was set to 10 mm. As a result, the proportion R1 of the area occupied by the first protrusions was 19% in the first region, and the proportion R2 of the area occupied by the second protrusions was 9.7% in the second region. The air permeability P1 of the first region was 370 s/100 mL, and the air permeability P2 of the second region was 345 s/100 mL.

### (4) Nonaqueous Electrolyte Preparation

Ethylene carbonate (EC) and dimethyl carbonate (DMC) were mixed in a volume ratio EC:DMC of 30:70, and LiPF₆ and LiBF₂(C₂O₄) were dissolved in the resulting mixed solvent at concentrations of 1 mol/L and 0.1 mol/L, respectively, to prepare a liquid nonaqueous electrolyte.

### (5) Battery Assembly

The positive electrode and the negative electrode current collector were spirally wound with the separator therebetween in an inert gas atmosphere to produce an electrode group. In doing so, the separator was positioned such that the spacer layer was located opposite the negative electrode. The electrode group was housed in a bag-shaped package body formed of a laminated sheet including an Al layer, and the nonaqueous electrolyte was injected thereinto. Then, the package body was sealed to complete a lithium secondary battery A1.

### <<Example 2>>

A battery A2 was produced in the same manner as in the battery A1, except that the interval (pitch) between each pair of opposite sides of each regular hexagon in the first pattern was changed to 10 mm and the line width W1 of the first protrusions was changed to 1.0 mm. In the second pattern, R1 was 19% and R2 was 9.7%. P1 was 373 s/100 mL and P2 was 322 s/100 mL.

### <<Example 3>>

In the first pattern, the interval (pitch) between each pair of opposite sides of each regular hexagon was changed to 2.25 mm and the line width W1 of the first protrusions was changed to 0.25 mm. Further, the second pattern was changed to a stripe pattern. Specifically, a plurality of linear second protrusions extending in the second direction were formed in the second region. The intervals (pitch) between the plurality of linear second protrusions in the first direction were set to 5 mm, and the line width W2 was set to 0.5 mm. A battery A3 was produced in the same manner as in the battery A1 except for the above. R1 was 21% and R2 was 10%. P1 was 381 s/100 mL and P2 was 345 s/100 mL.

### <<Example 4>>

In both the first pattern and the second pattern, the interval (pitch) between each pair of opposite sides of each regular hexagon was changed to 2.25 mm, and the line width W1 of the first protrusions and the line width W2 of the second protrusions were changed to 0.25 mm. Further, two cutouts having a width of 0.25 mm were provided in each honeycomb formed by the first protrusions (see FIG. 4), and two cutouts having a width of 0.5 mm were provided in each honeycomb formed by the second protrusions. A battery A4 was produced in the same manner as in the battery A1 except for the above. R1 was 16.5% and R2 was 14.5%. P1 was 370 s/100 mL and P2 was 345 s/100 mL.

### <<Example 5>>

A battery A5 was produced in the same manner as in the battery A1 except that the height of the first protrusions arranged in the first pattern was changed to 60 µm. R1 was 19% and R2 was 9.7%. P1 was 370 s/100 mL and P2 was 345 s/100 mL.

### <<Comparative Example 1>>

A battery B1 was produced in the same manner as in the battery A1, except that the first protrusions were formed in the first region in the same pattern as the second pattern. R1 and R2 were 9.7%. P1 and P2 were 345 s/100 mL.

### <<Comparative Example 2>>

A battery B2 was produced in the same manner as in the battery A1, except that the patterns were reversed between the first region and the second region. R1 was 9.7% and R2 was 19%. P1 was 345 s/100 mL and P2 was 370 s/100 mL.

### [Evaluation 1]

With respect to each of the obtained batteries, the heights of the space formed between the electrode and the substrate layer (the distance between the negative electrode and the substrate layer) were measured, using X-rays, in three turns located on the inner circumferential side where the first region of the separator is wound, and the average value of the three turns was obtained. The heights of the space formed between the electrode and the substrate layer were also measured in three turns located on the outer circumferential side where the second region of the separator is wound, and the average value of the three turns was obtained. The results are shown in Table 1. The numerical values in Table 1 are relative values where the height of the space of the battery A1 of Example 1 is defined as 100.

### [Evaluation 2]

Each of the obtained batteries was subjected to a charge and discharge test in a thermostatic bath set at 25°C under the following conditions. The pause time between the charging and the discharging was set to 20 minutes.

### (Charging)

Constant current charging was performed at a current of 2.15 mA per unit electrode area (square centimeter) until the battery voltage reached 4.1 V, and constant voltage charging was then performed at a voltage of 4.1 V until the current per unit electrode area reached 0.54 mA.

### (Discharging)

Constant current discharging was performed at a current of 2.15 mA per unit electrode area until the battery voltage reached 3.75 V

The above cycle of the charging and the discharging was repeated, and the number of cycles until the voltage fluctuation due to electrode buckling was detected was determined.

**[Table 1]**

| | First pattern | | | | Second pattern | | | | Space height | Number of cycles until buckling onset |
|---|---|---|---|---|---|---|---|---|---|---|
| | Shape | R1 % | P1 Sec/100 mL | H1 µm | Shape | R2 % | P2 Sec/100 mL | H2 µm | | |
| A1 | Honeycomb | 19 | 370 | 50 | Honeycomb | 9.7 | 345 | 50 | 100 | 89 |
| | W1 = 0.5 mm | | | | W2 = 0.5 mm | | | | | |
| | P = 5 mm | | | | P2 = 10 mm | | | | | |
| A2 | Honeycomb | 19 | 373 | 50 | Honeycomb | 9.7 | 322 | 50 | 100 | 91 |
| | W1 = 1.0 mm | | | | W2 = 0.5 mm | | | | | |
| | P = 10 mm | | | | P2 = 10 mm | | | | | |
| A3 | Honeycomb | 21 | 381 | 50 | Steipe | 10 | 345 | 50 | 100 | 93 |
| | W1 = 0.25 mm | | | | W2 = 0.5 mm | | | | | |
| | P = 2.25 mm | | | | P2 = 5.0 mm | | | | | |
| A4 | Honeycomb | 16.5 | 368 | 50 | Honeycomb | 14.5 | 351 | 50 | 100 | 92 |
| | W1 = 0.25 mm | | | | W2 = 0.25 mm | | | | | |
| | P = 2.25 mm | | | | | | | | | |
| | 0.25-mm cutout | | | | P2 = 2.25 mm | | | | | |
| | | | | | 0.5-mm cutout | | | | | |
| A5 | Honeycomb | 19 | 370 | 60 | Honeycomb | 9.7 | 345 | 50 | 110 | 94 |
| | W1 = 0.5 mm | | | | W2 = 0.5 mm | | | | | |
| | P = 5 mm | | | | P2 = 10 mm | | | | | |
| B1 | Honeycomb | 9.7 | 345 | 50 | Honeycomb | 9.7 | 345 | 50 | 80 | 44 |
| | W1 = 0.5 mm | | | | W2 = 0.5 mm | | | | | |
| | P = 10 mm | | | | P2 = 10 mm | | | | | |
| B2 | Honeycomb | 9.7 | 345 | 50 | Honeycomb | 19 | 370 | 50 | 68 | 23 |
| | W1 = 0.5 mm | | | | W2 = 0.5 mm | | | | | |
| | P = 10 mm | | | | P2 = 5 mm | | | | | |

It is understood from the results shown in Table 1 that space high enough for lithium deposition was formed in the batteries A1 to A5 of Examples, and the charge and discharge cycles can be performed for a long period of time, while low-height space was formed in the batteries B1 and B2 of Comparative Examples, and thus, electrode buckling is likely to occur.

### [Industrial Applicability]

The lithium secondary battery of the present disclosure can be used in electronic devices such as mobile phones, smart phones, and tablet terminals, electric vehicles including hybrid and plug-in hybrid vehicles, and household storage batteries combined with solar cells.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10 Lithium secondary battery
11 Positive electrode
12 Negative electrode
13 Separator
14 Electrode group
14s Space
50 Substrate layer
50A Substrate layer
50B Spacer layer
51 Porous sheet
52 Composite material layer
53A and 53B Spacer layer
53a First protrusion
53b Second protrusion

## Claims

1. A lithium secondary battery comprising:
an electrode group; and a nonaqueous electrolyte,
wherein the electrode group includes a positive electrode, a negative electrode, and a separator,
the positive electrode and the negative electrode are wound with the separator therebetween,
in the negative electrode, lithium metal deposits during charging and the lithium metal dissolves in the nonaqueous electrolyte during discharging,
the separator has a first surface facing outward of the electrode group and a second surface facing inward of the electrode group,
at least one of the first surface and the second surface has a first region including first protrusions arranged in a first pattern, and a second region including second protrusions arranged in a second pattern that differs from the first pattern, and
the second region is located on an outer circumferential side of the electrode group relative to the first region.

2. The lithium secondary battery according to claim 1,
wherein a proportion of an area occupied by the first protrusions in the first region is larger than a proportion of an area occupied by the second protrusions in the second region.

3. The lithium secondary battery according to claim 1,
wherein an air permeability of the first region is lower than an air permeability of the second region.

4. The lithium secondary battery according to claim 1,
wherein both the first protrusions and the second protrusions are linear protrusions, and
a line width of the first protrusions is wider than a line width of the second protrusions.

5. The lithium secondary battery according to claim 1,
wherein a height of the first protrusions is higher than a height of the second protrusions.

6. The lithium secondary battery according to any one of claims 1 to 5,
wherein the separator has an elongated shape having a length D1 in a first direction parallel to a winding axis and a length D2 (D1 < D2) in a second direction intersecting the first direction, and
a length of the first region in the second direction is 25% or less of a total length of the separator in the second direction.

7. The lithium secondary battery according to any one of claims 1 to 5,
wherein at least one of the first pattern and the second pattern is a geometric pattern.

8. A separator wound between a positive electrode and a negative electrode to form an electrode group, the separator comprising:
a first surface facing outward of the electrode group and a second surface facing inward of the electrode group,
wherein at least one of the first surface and the second surface has a first region including first protrusions arranged in a first pattern, and a second region including second protrusions arranged in a second pattern that differs from the first pattern, and
the second region is located on an outer circumferential side of the electrode group relative to the first region.

9. The separator according to claim 8,
wherein a proportion of an area occupied by the first protrusions in the first region is larger than a proportion of an area occupied by the second protrusions in the second region.

10. The separator according to claim 8,
wherein an air permeability of the first region is lower than an air permeability of the second region.

11. The separator according to claim 8,
wherein both the first protrusions and the second protrusions are linear protrusions, and
a line width of the first protrusions is wider than a line width of the second protrusions.

12. The separator according to claim 8,
wherein a height of the first protrusions is higher than a height of the second protrusions.

13. The separator according to any one of claims 8 to 12,
wherein the separator has an elongated shape having a length D1 in a first direction parallel to a winding axis and a length D2 (D1 < D2) in a second direction intersecting the first direction, and
a length of the first region in the second direction is 25% or less of a total length of the separator in the second direction.

14. The separator according to any of claims 8 to 12,
wherein at least one of the first pattern and the second pattern is a geometric pattern.

15. A separator having an elongated shape having a length D1 in a first direction and a length D2 (D1 < D2) in a second direction intersecting the first direction, the separator comprising:
a first surface; and a second surface opposite the first surface,
wherein at least one of the first surface and the second surface has a first region including first protrusions arranged in a first pattern, and a second region including second protrusions arranged in a second pattern that differs from the first pattern, and
the second region is located at a position farther from one end in the second direction than the first region.
